# EUROPEAN PATENT APPLICATION

(11) **EP 3 382 998 A1**
(43) Date of publication of application: **03.10.2018**
(21) Application number: 18164108.5
(22) Date of filing: 27.03.2018
(51) Int. Cl.: H04L 29/12

(54) **DETECTING HARDWARE ADDRESS CONFLICTS IN COMPUTER NETWORKS**

(30) Priority: 29.03.2017 US 201715472832
(71) Applicant: Juniper Networks, Inc., Sunnyvale, CA 94089 (US)
(72) Inventor: THOMAS, Reji, KA 560027 Bangalore (IN); BONICA, Ronald P., Sterling, VA 20164 (US)
(74) Representative: D Young & Co LLP

(57) **Abstract**

In general, techniques are described for detecting duplicate hardware addresses in network devices of a computer network. A first network device may send a request specifying a target hardware address. If a second network device receives the request and determines the target hardware address matches a hardware address of the second network device, the second network device send a response indicating the target hardware address. Otherwise, the second network device does not send a response to the request. If the first network device does not receive a response specifying the target hardware address, the first network device determines the target hardware address is available. If the first network device receives a response specifying the target hardware address, the first network device determines the target hardware address is unavailable.

## Description

### TECHNICAL FIELD

The present teachings relate to computer networks and, more particularly, hardware addresses for use by network devices within computer networks.

### BACKGROUND

A computer network is a collection of interconnected computing devices that exchange data and share resources. In some networks, such as Ethernet networks, each network device is assigned a unique hardware address, such as a Media Access Control (MAC) address. Each network device connected to the network may receive a frame sent on the network, but the network device ignores the frame unless a destination address field of the frame specifies a hardware address matching the hardware address of the network device or unless the destination address field of the frame specifies a hardware address matching a special-purpose broadcast address. A network device sending a frame on the network specifies its own hardware address in a source address field of the frame. Typically, hardware addresses are assigned to network devices at the time the network devices are manufactured. The hardware addresses assigned to the network devices are typically immutable.

Network devices frequently use the Address Resolution Protocol (ARP) to determine the hardware addresses of other network devices connected to a network. In ARP, a requesting network device sends a frame that has a destination address field specifying the broadcast address and that has a payload specifying an address of a higher-layer protocol (i.e., a protocol address), such as an Internet Protocol (IP) address. If another network device on the network is associated with the specified protocol address, the other network device sends a response specifying the hardware address of the other network device. In this way, the requesting network device may build up a mapping of protocol addresses and hardware addresses.

### SUMMARY

In general, techniques are described for detecting hardware address conflicts in computer networks. Although hardware addresses, such as Media Access Control (MAC) addresses, assigned during manufacture of network devices are typically unique, there are situations in which duplicate hardware addresses can occur. For example, it may be desirable to assign hardware addresses to virtual machines (VMs) so that the VMs can interact on a network as if they were physical machines that were assigned hardware addresses during manufacture. However, a system assigning hardware addresses to VMs might assign a hardware address to a VM despite the hardware address already being assigned (e.g., during manufacture) to another network device connected to the network. The existence of two network devices with the same hardware address, such as two locally-administered MAC addresses, on the same network may cause various problems, such as two separate network devices responding to a message intended for only one network device.

This disclosure describes a protocol that may detect the presence of duplicate hardware addresses being present in a network. For example, a requesting network device may send a frame on a network. The frame may comprise a destination address field and a payload. The destination address field of the frame may specify a broadcast address. The payload may comprise a request message that specifies a target hardware address. A responding network device (i.e., another network device connected to the network) may ignore the request message if the target hardware address does not match a hardware address of the responding network device.

However, in response to determining that the request message specifies a hardware address assigned to the responding network device, the responding network device may send a frame on the network. The frame sent by the responding network device may comprise a payload including a response message. The response message specifies the target hardware address. Based on receiving a response message specifying the target hardware address, the requesting network device determines that the target hardware address is unavailable. Accordingly, in some examples, the requesting network device may select another target hardware address. However, if the requesting network device does not receive a response message specifying the target hardware address, the requesting network device determines that the target hardware address is available.

In one example, this disclosure describes a method for detecting hardware address conflicts in a computer network, the method comprising: determining, by a network device, a target hardware address; sending, by the network device, a request message on a network, the request message specifying the target hardware address; determining, by the network device, whether the network device has received a response message specifying the target hardware address within a time limit; and in response to determining that the network device has received a response message specifying the target hardware address within the time limit, determining that the target hardware address is unavailable.

In another example, this disclosure describes a method for detecting hardware address conflicts in a computer network, the method comprising: receiving, by a network device, a request message specifying a target hardware address; determining, by the network device, whether the target hardware address matches a hardware address of the network device; and in response to determining the target hardware address matches the hardware address of the network device, sending, by the network device, a response message specifying the target hardware address.

In another example, this disclosure describes a network device comprising: a network interface controller (NIC); and processing circuitry implementing one or more processors configured to: determine a target hardware address; send a request message on a network, the request message specifying the target hardware address; determine whether the network device has received a response message specifying the target hardware address within a time limit; and in response to determining that the network device has received a response message specifying the target hardware address within the time limit, determine that the target hardware address is unavailable.

In another example, this disclosure describes a network device comprising: a network interface controller (NIC); and processing circuitry implementing one or more processors configured to: receive a request message specifying a target hardware address; determine whether the target hardware address matches a hardware address of the network device; and in response to determining the target hardware address matches the hardware address of the network device, send a response message specifying the target hardware address.

The details of one or more embodiments of the techniques are set forth in the accompanying drawings and the description below. Other features, objects, and advantages of the techniques will be apparent from the description, drawings, and claims.

### BRIEF DESCRIPTION OF DRAWINGS

FIG. 1 is a block diagram illustrating an example network system in which a local network device implements hardware address conflict detection techniques of this disclosure.
FIG. 2 is a block diagram illustrating an example Duplicate MAC Address Detection (DMAD) packet format, in accordance with one or more techniques of this disclosure.
FIG. 3 is a block diagram illustrating an example Address Resolution Protocol (ARP) packet format that may be used for DMAD, in accordance with one or more techniques of this disclosure.
FIG. 4 is a flowchart illustrating an example operation of a requesting network device, in accordance with one or more techniques of this disclosure.
FIG. 5A is a flowchart illustrating an example interaction between a requesting network device and a responding network device to implement a DMAD protocol in accordance with one or more techniques of this disclosure.
FIG. 5B is a flowchart illustrating a continuation of the example interaction of FIG. 5A.
FIG. 5C is a flowchart illustrating a continuation of the example interaction of FIG. 5A.

### DETAILED DESCRIPTION

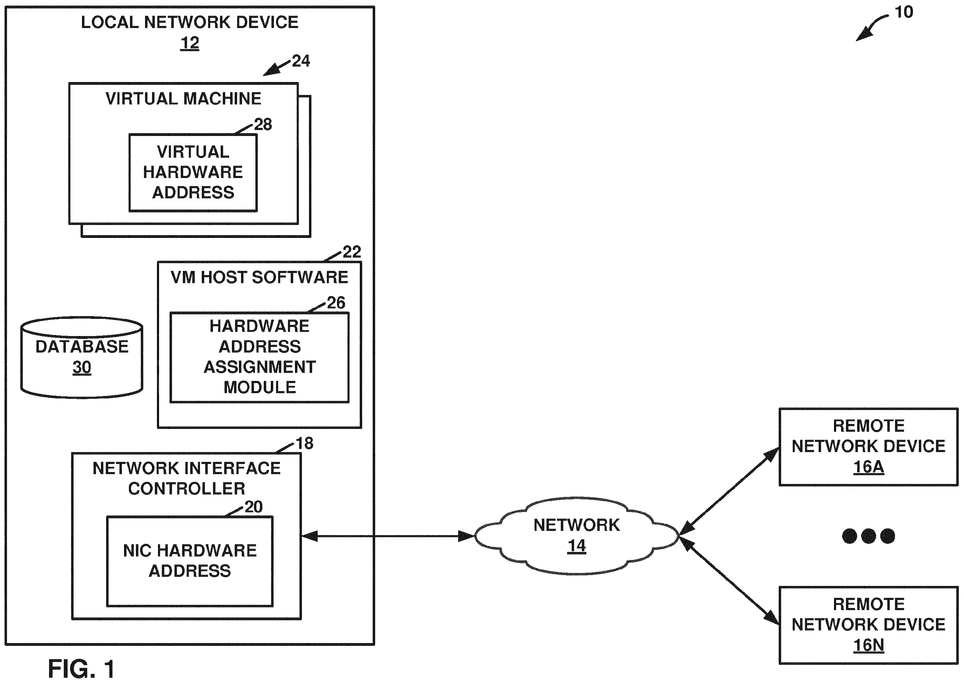

FIG. 1 is a block diagram illustrating an example network system 10 in which a local network device 12 implements hardware address conflict detection techniques of this disclosure. As shown in FIG. 1, network system 10 comprises local network device 12, a network 14, and remote network devices 16A-16N (collectively, "remote network devices 16"). Local network device 12 is "local" in the context of this disclosure in the sense that this disclosure describes local network device 12 as being an initiating device of the hardware address conflict detection techniques of this disclosure. Likewise, remote network devices 16 are "remote" in the context of this disclosure in the sense that remote network devices 16 are remote from local network device 12.

Local network device 12 may comprise various types of computing devices. For example, local network device 12 may comprise a server computer, a blade server, a personal computer, a mobile computing device (e.g., a tablet computer, smartphone), an intermediate network device (e.g., a router, gateway, intrusion detection device), or another type of network-equipped computing device. Remote network devices 16 each may comprise similar types of network-equipped computing devices.

Network 14 may comprise various devices and network links that facilitate communication among local network device 12 and remote network devices 16. For instance, network 14 may comprise one or more hubs, repeaters, and/or switches. Network 14 comprises an Ethernet network or other type of network that supports broadcast communication to all network devices connected to network 14 and relies on each device having a unique address. For ease of explanation, this disclosure primarily discusses network 14 as an Ethernet network.

As shown in the example of FIG. 1, local network device 12 comprises a network interface controller (NIC) 18. NIC 18 comprises a computer hardware component that connects local network device 12 to network 14. In some examples, NIC 18 is built into a motherboard of local network device 12. NIC 18 has a NIC hardware address 20. For instance, physical hardware address 20 may be stored in a memory unit (e.g., a read only memory (ROM) unit, programmable read only memory (PROM), electrically-erasable programmable read only memory (EEPROM)) of NIC 18. NIC hardware address 20 may be a Media Address Control (MAC) address. A manufacturer of NIC 18 may assign hardware address 20 to NIC 18 during manufacture of NIC 18. Typically, the hardware address of a NIC does not change during the life of the NIC, and, in some cases, may be immutable. However, in some examples, NIC hardware address 20 may be changed. In some examples, NIC hardware address 20 may be a hardware address verified by the hardware address non-duplication techniques of this disclosure.

When communicating on network 14, a network device may transmit a message (hereinafter referred to as a "frame") that specifies a source address, a destination address, a payload protocol type field, and a payload. The source address of the frame is the hardware address of the transmitting network device. Sending the source address in the frame may allow a receiving network device to respond by sending a frame back to the initial transmitting device. The destination address of a frame identifies an intended receiver of the frame. The destination address may be a broadcast address (e.g., ff:ff:ff:ff:ff) that indicates that all network devices on the network are the intended receives of the frame. The payload protocol type field of a frame identifies a communication protocol of the payload of the frame. In the context of Ethernet, the payload protocol type field may be referred to as an EtherType field. For example, a payload protocol type field may indicate the payload is formatted in an Address Resolution Protocol (ARP), an Internet Protocol (IP), IPSec protocol, or another type of communication protocol.

Furthermore, as shown in the example of FIG. 1, local network device 12 may comprise virtual machine (VM) host software 22. VM host software 22 may comprise various types of software systems that host VMs 24. For example, VM host software 22 may comprise an operating system. In another example, VM host software 22 may comprise a hypervisor.

Each of VMs 24 is an emulation of a respective computer system. Since each of VMs 24 emulates a respective computer system, each of VMs 24 should have a respective hardware address for use in communicating on network 14. Accordingly, a hardware address assignment module (HAAM) 26 may assign a respective virtual hardware address 28 to each respective VM 24. Subsequently, when NIC 18 receives a frame specifying a virtual hardware address of a VM as the destination address, VM host software 22 accepts the frame and forwards the frame to the VM. When a VM generates a frame for transmission on network 14, the frame specifies the virtual hardware address of the VM as the source address of the frame. VM host software 22 then passes the frame to NIC 18 for transmission on network 14.

Hardware addresses assigned during manufacture of NICs are typically unique (at least regionally) because such hardware addresses typically include a prefix corresponding the manufacturer and the manufacturer does not reuse hardware addresses for its own products. However, there may be no such assurance for virtual hardware addresses 28. In other words, there may be no guarantee that two network devices, when considering VMs 24 as distinct network devices, do not have the same hardware address. For example, HAAM 26 may assign virtual hardware addresses 28 such that each of virtual hardware addresses is different, but it might so happen that one of remote network devices 16 has a hardware address that matches one of virtual hardware addresses 28 assigned to VMs 24. Having two network devices on the same network with the same hardware address may cause significant problems. For example, two network devices may respond to the same frame, resulting in confusing errors.

This disclosure describes techniques that may overcome certain problems associated with the possibility of assignment of virtual hardware addresses. Particularly, this disclosure describes techniques for determining whether there are multiple network devices on a network claiming the same hardware address.

In one example, HAAM 26 may run a Duplicate MAC Address Detection (DMAD) protocol. In a first step, HAAM 26 generates a request message specifying NIC hardware address 20 and a target hardware address. As mentioned elsewhere in this disclosure, NIC hardware address 20 may be assigned to NIC 18 of local network device 12 at a time of manufacture of NIC 18. The target hardware address may be a hardware address that HAAM 26 plans to assign to one of VMs 24. HAAM 26 then instructs NIC 18 to send, on network 14, a frame comprising the request message and having a destination address field specifying a broadcast address. Thus, each network device connected to network 14 (e.g., remote network devices 16, already configured VMs 24) may receive and accept the frame. In some examples, a source hardware address field of the frame may specify a unicast hardware address reserved from the Internet Assigned Numbers Authority (IANA) for use with DMAD).

In response to receiving the frame, a network device determines whether the target hardware address specified in the request message matches the hardware address of the network device. In the case of a VM, the VM behaves as though a virtual hardware address assigned to the VM is the hardware address of the VM. Therefore, a VM responds to the request message like a non-virtual network device.

In response to determining the target hardware address specified in the request message matches the hardware address of the network device, the network device generates a response message. The response message specifies the target hardware address. The network device then sends, on network 14, a frame comprising the response message. In some examples, a destination hardware address of the frame specifies the broadcast address. In some examples, the destination hardware address of the frame specifies the NIC hardware address specified in the request message (i.e., NIC hardware address 20). In some examples, a source hardware address field of the frame may specify a unicast hardware address reserved from the IANA for use with DMAD).

On the other hand, in response to determining the target hardware address specified in the request message does not match the assigned hardware address of the network device, the network device does not generate a response message. If HAAM 26 does not receive a response message specifying the target hardware address, HAAM 26 may determine that the target hardware address is available and may assign the target hardware address to a VM. On the other hand, if HAAM 26 receives a response message specifying the target hardware address, HAAM 26 may select a new virtual hardware address and perform the procedure above with the new virtual hardware address as the target hardware address.

Thus, in the example of FIG. 1, a network device (e.g., local network device 12) may determine a first target hardware address (e.g., a MAC address). Additionally, the network device may send a first request message on network 14, the first request message specifying the target hardware address. The network device may determine whether the network device has received a first response message specifying the first target hardware address within a time limit. In response to determining that the network device has received a response message specifying the first target hardware address within the time limit, the network device determines that the first target hardware address is unavailable. Furthermore, in some examples, the network device may determine a second target hardware address and send a second request message on the network. The second request message specifies the second target hardware address. In this example, the network device may determine whether the network device has received a response message specifying the second target hardware address within the time limit. In response to determining that the network device has not received a response message specifying the second target hardware address within the time limit, the network device may determine that the second target hardware address is available. Based on the second target hardware address being available, the network device may assign the second target hardware address to a physical or virtual machine, such as a VM (e.g., one of VMs 24).

Furthermore, in the example of FIG. 1, a network device (e.g., local network device 12, one of remote network devices 16) may receive a first request message specifying a first target hardware address (e.g., a MAC address) and may determine whether the first target hardware address matches a hardware address of the network device. In response to determining the first target hardware address matches the hardware address of the network device, the network device may send a response message specifying the first target hardware address. Furthermore, in some examples, the network device may receive a second request message specifying a second target hardware address and may determine whether the second target hardware address matches the hardware address of the network device. In response to determining the second target hardware address does not match the hardware address of the network device, the network device does not send any message responding to the second request message.

In the example of FIG. 1, local network device 12 may comprise a database 30. Database 30 may store indicating hardware address of network devices connected to network 14. VM host software 24 (e.g., HAAM 26) may add entries to database 30 specifying hardware addresses in response to receiving response messages specifying the hardware addresses, in response to successfully assigning a hardware address to one of VMs 24, or in response to other events. Furthermore, in some examples, a response message may comprise a device identifier. The device identifier may comprise a character string the identifies a network device sending the response. Entries in database 30 may map such device identifiers to hardware addresses.

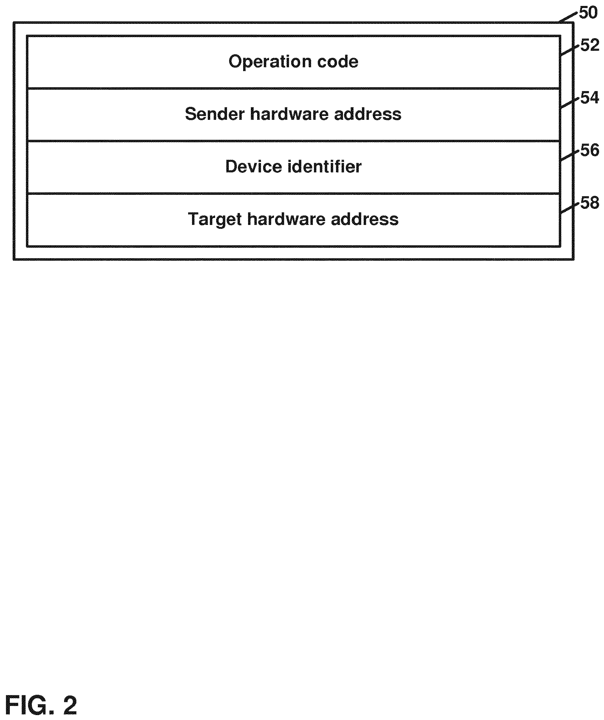

FIG. 2 is a block diagram illustrating an example Duplicate MAC Address Detection (DMAD) packet format, in accordance with one or more techniques of this disclosure. In the example of FIG. 2, request messages and response messages may have the same format. Thus, in the example of FIG. 2, a message 50 may comprise an operation code field 52, a sender hardware address field 54, a device identifier field 56, and a target hardware address field 58.

Operation code field 52 specifies an operation code. The operation code specifies whether message 50 is a DMAD request or a DMAD response. For example, a first value of the operation code specifies that message 50 is a DMAD request and a second, different value of the operation code specifies the message 50 is a DMAD response.

In a DMAD request, sender hardware address field 54 specifies a NIC hardware address (e.g., NIC hardware address 20 (FIG. 1)) of a network device sending the DMAD request (e.g., local network device 12). Device identifier field 56 may specify a device identifier of a network device sending message 50. In some examples, device identifier field 56 is omitted from message 50. The device identifier may be an opaque string that people or devices can use to identify the network device sending the message 50. For example, the device identifier may specify a string such as "RACK_01_BLADE_12". Target hardware address field 58 may specify a target hardware address. In the case where message 50 is a DMAD request, target hardware address field 58 may specify a hardware address that is proposed to be assigned to a VM. In the case where message 50 is a DMAD response, target hardware address field 58 may specify a hardware address of a network device sending the DMAD response.

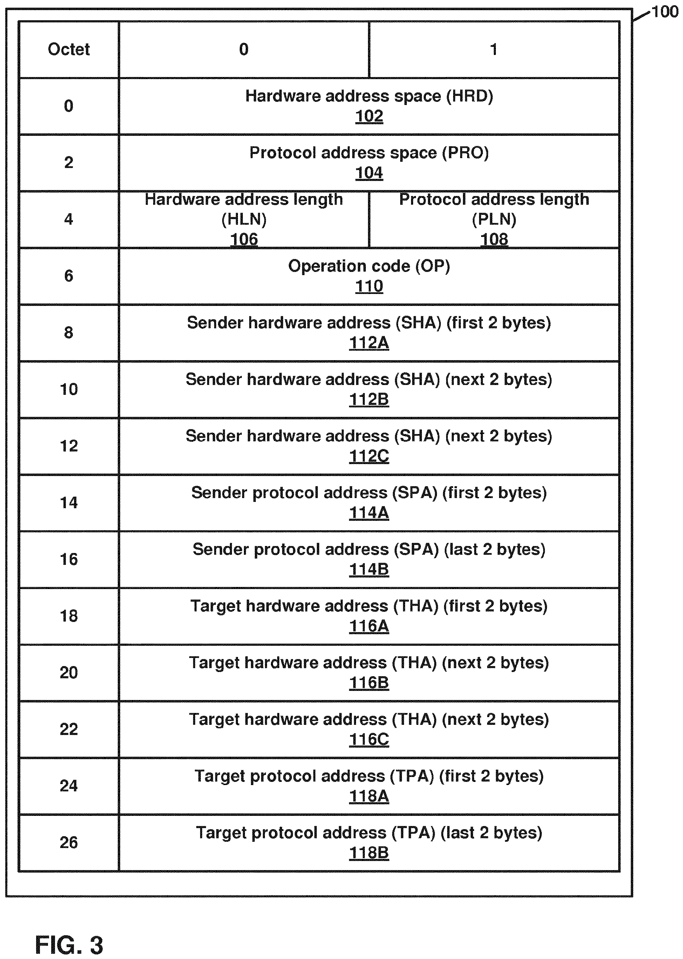

FIG. 3 is a block diagram illustrating an example Address Resolution Protocol (ARP) packet format that may be used for DMAD, in accordance with one or more techniques of this disclosure. ARP is a commonly-implemented protocol for resolving MAC addresses based on known protocol addresses (e.g., IP addresses). In accordance with a technique of this disclosure, modules implementing ARP (e.g., hardware and/or software implementing ARP) may be modified to perform DMAD using packets structured according to ARP.

Thus, request messages and response messages may conform to an ARP format. Furthermore, a network device (e.g., local network device 14) may send or receive a frame (e.g., an Ethernet frame) that comprises a request message or a response message, the frame having a payload protocol field (e.g., EtherType field) specifying a value corresponding to ARP.

As shown in FIG. 3, an ARP packet 100 comprises a hardware address space field 102 (abbreviated "HRD"), a protocol address space field 104 (abbreviated "PRO"), a hardware address length field 106 (abbreviated "HLN"), a protocol address length field 108 (abbreviated "PLN"), an operation code field 110 (abbreviated "OP"), up to three 2-byte fields 112A-112C comprising a sender hardware address field 112 (abbreviated "SHA"), up to two 2-byte fields 114A-114B comprising a sender protocol address field 114 (abbreviated "SPA"), up to three 2-byte fields 116A-116C comprising a target hardware address field 116 (abbreviated "THA"), and up to two 2-byte fields 118A-118B comprising a target protocol address field 118 (abbreviated "TPA"). Target address space field 102 may also be referred to as a hardware type (HTYPE) field. Protocol address space field 104 may also be referred to as a protocol type (PTYPE) field.

In accordance with a technique of this disclosure, a new value (e.g., "DMAD-over-Ethernet") may be defined for hardware address space field 102 identifying ARP packet 100 as belonging to DMAD. The semantics of protocol address space field 104, hardware address length field 106, and protocol address length field 108 may be the same as in ARP. For instance, protocol address space field 104 may specify a protocol for which the ARP request is intended. For instance, the value 0x0800 may specify IPv4. Allowable values of protocol address space 104 may share a numbering space with those for EtherType. Hardware address length field 106 specifies a length in octets of a hardware address. Ethernet addresses (e.g., MAC addresses) have a length of 6 octets. Protocol address length field 108 specifies a length in octets of addresses used in the upper layer protocol specified by protocol address space field 104.

In accordance with a technique of this disclosure, new values of operation code field 110 may be defined to indicate a DMAD request (mac-verify_req) and a DMAD response (mac_verify_resp). Furthermore, sender hardware address field 112 specifies a hardware address of a sender of ARP packet 100. For instance, if ARP packet 100 is a DMAD request, sender hardware address field 112 may specify the NIC hardware address (e.g., NIC hardware address 20 (FIG. 1)) of the sending network device (e.g., local network device 12 (FIG. 1)). If ARP packet 100 is a DMAD response, sender hardware address field 112 may specify the hardware address of the sending network device (e.g., one of remote network devices 16 (FIG. 1)).

Furthermore, sender protocol address field 114 may specify a device identifier of a network device sending ARP packet 100. As indicated above, the device identifier of the network device may comprise an opaque string that can be used to identify the network device.

Target hardware address field 116 specifies a target hardware address. For instance, if ARP packet 100 is a DMAD request, the target hardware address may be a hardware address for which a network device sending the DMAD request is determining availability. In rare circumstances, multiple network devices may have the same NIC hardware address. Furthermore, a network device with a particular hardware address may join a network (e.g., network 14 (FIG. 1) after that particular hardware address has already been successfully assigned as a virtual hardware address to a VM (e.g., one of VMs 24 (FIG. 1)) on the network. Hence, to avoid problems associated with having multiple devices on a network having the same hardware address, a network device may send a DMAD request specifying its NIC hardware address in both sender hardware address field 112 and target hardware address field 116.

In both DMAD requests and DMAD responses, target protocol address field 118 may be undefined. In a DMAD response, target hardware address field 116 may be undefined. Thus, a DMAD request message may comprise a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field. In this example, n is defined by the hardware address length field and m is defined by the protocol address length field. The operation code field may specify a value indicating that the request message is a duplicate hardware address detection request message and the source hardware address field may specify a NIC hardware address of the network device. The NIC hardware address may be assigned to a NIC of the network device at a time of manufacture of the NIC. The source protocol address field may specify a device identifier of the network device and the target hardware address field may specify the target hardware address. The target protocol address field may be undefined. Similarly, a DMAD response message may comprise a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field, where n is defined by the hardware address length field and m is defined by the protocol address length field. In the DMAD response, the operation code field may specify a value indicating that the response message is a duplicate hardware address detection response message, the source hardware address field may specify the target hardware address, and the source protocol address field may specify a device identifier of a second network device. In the DMAD response, the target hardware address field and the target protocol address field are undefined.

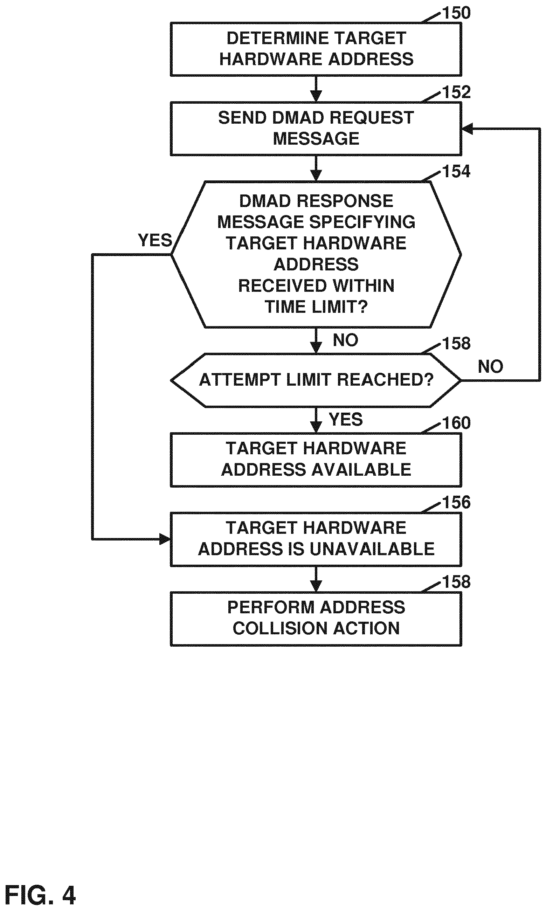

FIG. 4 is a flowchart illustrating an example operation of a requesting network device, in accordance with one or more techniques of this disclosure. The flowcharts of this disclosure are presented as examples. Other examples may include more, fewer, or different actions, or actions may be performed in parallel or different orders. In the context of FIG. 1, the requesting network device may be local network device 12, any of remote network devices 16, or another device sending a DMAD request to verify availability of a hardware address.

In the example of FIG. 4, the requesting network device determines a target hardware address (150). For instance, where the requesting network device is not assigning virtual hardware addresses, but is merely verifying that its own hardware address is not assigned to another network device (e.g., virtual machine or other network device) on the network, determining the target hardware address may merely comprise reading a NIC hardware address of a NIC of the requesting network device. In instances where the requesting network device is assigning a hardware address (e.g., assigning a virtual hardware address to a VM), the requesting network device may determine the target hardware address in various ways. For example, the requesting network device may use pseudorandom number generator to determine the target hardware address. In another example, the requesting network device may determine the target hardware address by incrementing a previously-assigned virtual hardware address.

After determining the target hardware address, the requesting network device may send a DMAD request message (152). The DMAD request message specifies the target hardware address. For instance, in the example of FIG. 2, target hardware address field 58 may specify the target hardware address. In the example of FIG. 2, target hardware address field 116 may specify the target hardware address.

The requesting network device may then determine whether the requesting network device has received a DMAD response message specifying the target hardware address within a time limit (154). In various examples, the time limit may have various values. For example, the time limit may be 1 second, 2 seconds, or another length of time. In response to receiving a DMAD response message specifying the target hardware address within the time limit ("YES" branch of 154), the requesting network device may determine that the target hardware address is unavailable (156). For instance, the requesting network device may set a value in memory indicating that the target hardware address is unavailable. Additionally, the requesting network device may perform an address collision action (158). For example, the requesting network device may notify a system administrator of the duplicate target hardware addresses. In some examples, the requesting network device may select a different target hardware address (150) and send another DMAD request message (152).

On the other hand, in response to determining that the requesting network device has not received a DMAD response message specifying the target hardware address within the time limit ("NO" branch of 154), the requesting network device may determine whether an attempt limit has been reached (158). In some examples, the attempt limit is equal to 3, or another value. In response to determining the attempt limit has not yet been reached ("NO" branch of 158), the requesting network device may loop back and send another DMAD request message with the same target hardware address (152). However, in response to determining that the attempt limit has been reached ("YES" branch of 158), the requesting network device may determine that the target hardware address is available (160). For instance, the requesting network device may set a value in memory indicating that the target hardware address is available. Thus, the requesting network device may send several DMAD request messages specifying the target hardware address before determining the target hardware address is available. For instance, if the attempt limit is 3, the requesting network device may send 3 DMAD request messages specifying the target hardware address before determining the target hardware address is available.

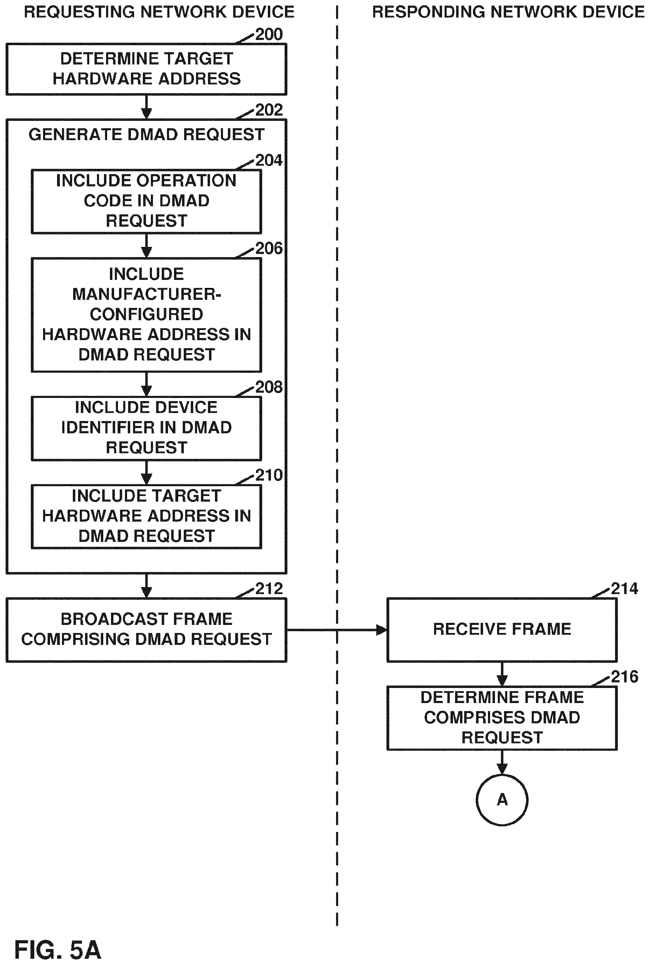

FIG. 5A is a flowchart illustrating an example interaction between a requesting network device and a responding network device to implement a DMAD protocol in accordance with one or more techniques of this disclosure. In the context of FIG. 1, the requesting network device may be local network device 12 or any of remote network devices 16. Likewise, in the context of FIG. 1, the responding network device may be local network device 12 or any of remote network devices 16.

As shown in the example of FIG. 5A, the requesting network device may determine a target hardware address (200). The requesting network device may determine the target hardware address in accordance with the examples provided elsewhere in this disclosure.

Additionally, the requesting network device may generate a DMAD request message (202). As part of generating the DMAD request message, the requesting network device may include an operation code in the DMAD request message (204). The operation code may identify the message as a DMAD request message. The requesting network device may also include a NIC hardware address of the requesting network device in the DMAD request message (206). For instance, in the context of FIG. 1, the requesting network device may include NIC hardware address 20 in the DMAD request message. The requesting network device may include the NIC hardware address in sender hardware address field 54 (FIG. 2) or 112A (FIG. 3).

The requesting network device may also include a device identifier in the DMAD request message (208). For instance, the requesting network device may include the device identifier in device identifier field 56 (FIG. 2) or sender protocol address field 114 (FIG. 3).

Furthermore, the requesting network device may include the target hardware address in the DMAD request message (210). For instance, the requesting network device may include the target hardware address target hardware address field 58 (FIG. 2) or target hardware address field 116 (FIG. 3).

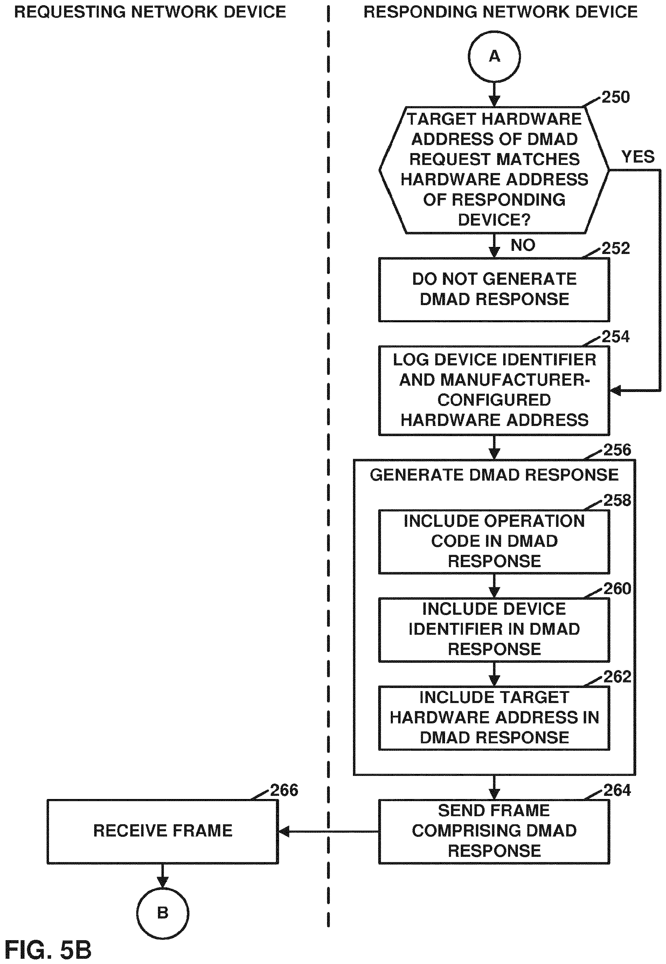

The requesting network device may then broadcast a frame (e.g., an Ethernet frame) comprising the DMAD request message on a network (212). In other words, the requesting network device may send a frame comprising the DMAD request message that specifies the broadcast address as the destination address. For instance, requesting network device may specify, in a source hardware address field of the frame, a unicast hardware address reserved from the IANA for use with DMAD. Subsequently, the responding network device may receive the frame (214). The responding network device may then determine whether the frame comprises a DMAD request message (216). Assuming that the frame comprises a DMAD request message, the interaction of FIG. 5A continues as shown in FIG. 5B (as indicated by the circle marked "A").

FIG. 5B is a flowchart illustrating a continuation of the example interaction of FIG. 5A. As shown in the example of FIG. 5B, the responding network device may determine whether the target hardware address of the DMAD request message matches a hardware address of the responding network device (250). In response to determining that the target hardware address of the DMAD request message does not match the hardware address of the responding network device ("NO" branch of 250), the responding device does not generate a DMAD response message (252).

On the other hand, in response to determining that the target hardware address of the DMAD request message matches the hardware address of the responding network device ("YES" branch of 250), the responding network device may log a device identifier, NIC hardware address, and/or target hardware address specified in the DMAD request message (254). Furthermore, in response to determining that the target hardware address specified by the DMAD request message matches the hardware address of the responding device, the responding network device may generate a DMAD response message (256). As part of generating the DMAD response message, the responding network device may include an operation code in the DMAD response message (258). The operation code specifies that the message is a DMAD response message. Additionally, the responding network device may include a device identifier of the responding device in the DMAD response message (260). For instance, the responding network device may include the device identifier in device identifier field 56 (FIG. 2) or sender protocol address field 114 (FIG. 3). The responding network device also includes the target hardware address in the DMAD response message (262). In other words, the responding network device include the hardware address of the responding network device in the DMAD response message. The responding network device may include the target hardware address in sender hardware address field 54 (FIG. 2) or sender hardware address field 112 (FIG. 3).

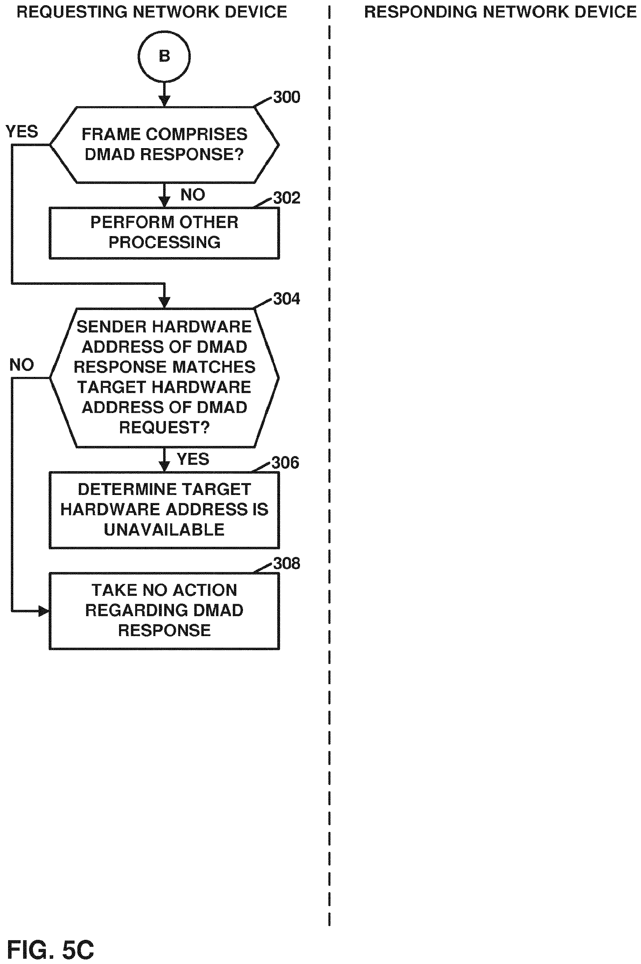

The responding network device may then send a frame (e.g., an Ethernet frame) comprising the DMAD response message (264). In some examples, the responding network device may broadcast the frame. In some examples, the frame may specify the NIC hardware address specified in the DMAD request message as the destination address of the frame. Subsequently, the requesting network device may receive the frame (266). The interaction of FIG. 5A and FIG. 5B then continues in FIG. 5C.

FIG. 5C is a flowchart illustrating a continuation of the example interaction of FIG. 5A. In the example of FIG. 5C, the requesting network device may determine whether the frame comprises a DMAD response message (300). The requesting network device may use the operation code field to determine whether the frame comprises a DMAD response message. In response to determining the frame does not comprise a DMAD response message ("NO" branch of 300), the requesting network device may perform some other processing on the frame, which is outside the scope of this disclosure. However, in response the determining that the frame comprises a DMAD response message ("YES" branch of 300), the requesting network device may determine whether the sender hardware address of the DMAD response message matches the target hardware address of the DMAD request message (304).

In response to determining that the sender hardware address of the DMAD response message matches the target hardware address of the DMAD request message ("YES" branch of 304), the requesting network device may determine that the target hardware address is unavailable (306). In response to determining that the sender hardware address of the DMAD response message does not match the target hardware address of the DMAD request message ("NO" branch of 304), the requesting network device may not be required to take action regarding the DMAD response (308).

However, in some examples, may log the device identifier specified in the DMAD response message and sender hardware address of the DMAD response message / target hardware address. In this way, the requesting network device may build up a database a mapping of device identifiers to hardware addresses. Furthermore, when the requesting network device is subsequently determining a hardware address to assign to a VM, the requesting network device may check the database to ensure that a potential target hardware address is not already assigned to another network device connected to the network. Doing so may reduce the likelihood of the requesting network device sending a DMAD request message specifying a target hardware address that matches a hardware address of a network device connected to the network. Thus, in this example, a network device may receive (e.g., prior to determining a target hardware address) a frame having a destination address field specifying a broadcast address and comprising a first response message, the first response message specifying a hardware address. In this example, in response to receiving the first response message, the network device may store the hardware address specified by the first response message in a database. Furthermore, in this example, the network device may determine, based on the hardware address specified by the response message being stored in the database, the target hardware address such that the target hardware address does not match the hardware address specified by the response message.

As mentioned above, in some examples, network devices broadcast DMAD response messages. Thus, each network device receives DMAD response messages regardless of whether the network device sent a corresponding DMAD request message. However, regardless of whether the network device sent a DMAD request message corresponding to the DMAD response message, the network device may still add data to the database associating the device identifier and target hardware addresses specified by the DMAD response message. The network device may use this information in the database when subsequently determining a target hardware address for assignment. This may further reduce the probability of the network device determining a target hardware address that is already associated with a network device connected to the network.

In one or more examples, the functions described may be implemented in hardware, software, firmware, or any combination thereof. If implemented in software, the functions may be stored on or transmitted over, as one or more instructions or code, a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including processing circuitry implementing one or more processors as described above, in conjunction with suitable software and/or firmware.

Therefore, from one perspective there have been described techniques for detecting duplicate hardware addresses in network devices of a computer network. A first network device may send a request specifying a target hardware address. If a second network device receives the request and determines the target hardware address matches a hardware address of the second network device, the second network device send a response indicating the target hardware address. Otherwise, the second network device does not send a response to the request. If the first network device does not receive a response specifying the target hardware address, the first network device determines the target hardware address is available. If the first network device receives a response specifying the target hardware address, the first network device determines the target hardware address is unavailable.

Various embodiments of the techniques have been described. These and other embodiments are within the scope of the following claims.

In addition to or as an alternative to the above, the following examples are described. The features described in any of the following examples may be utilized with any of the other examples described herein.
Example 1. A method for detecting hardware address conflicts in a computer network, the method comprising: determining, by a network device, a target hardware address; sending, by the network device, a request message on a network, the request message specifying the target hardware address; determining, by the network device, whether the network device has received a response message specifying the target hardware address within a time limit; and in response to determining that the network device has received a response message specifying the target hardware address within the time limit, determining that the target hardware address is unavailable.
Example 2. The method of example 1, wherein the target hardware address is a first target hardware address and the request message is a first request message, the method further comprising: determining, by the network device, a second target hardware address; sending, by the network device, a second request message on the network, the second request message specifying the second target hardware address; determining, by the network device, whether the network device has received a response message specifying the second target hardware address within the time limit; and in response to determining that the network device has not received a response message specifying the second target hardware address within the time limit, determining that the second target hardware address is available.
Example 3. The method of example 2, further comprising: based on the second target hardware address being available, assigning the second target hardware address to a virtual machine.
Example 4. The method of example 1, 2 or 3, wherein the target hardware address is a Media Access Control (MAC) address.
Example 5. The method of any of examples 1 to 4, wherein sending the request message comprises: sending, by the network device, a frame that comprises the request message, the frame having a destination address field specifying a broadcast address.
Example 6. The method of any of examples 1 to 5, wherein the method further comprises: including, in the request message, a NIC hardware address of the network device, the NIC hardware address being assigned to a network interface card (NIC) of the network device at a time of manufacture of the NIC.
Example 7. The method of any of examples 1 to 6, wherein the request message conforms to an Address Resolution Protocol format.
Example 8. The method of example 7, wherein sending the request message comprises: sending, by the network device, an Ethernet frame that comprises the request message, the Ethernet frame having an EtherType field specifying a value corresponding to the Address Resolution Protocol.
Example 9. The method of example 7 or 8, wherein: the request message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field, n is defined by the hardware address length field, m is defined by the protocol address length field, the operation code field specifying a value indicating that the request message is a duplicate hardware address detection request message, the source hardware address field specifies a NIC hardware address of the network device, the NIC hardware address being assigned to a network interface controller (NIC) of the network device at a time of manufacture of the NIC, the source protocol address field specifies a device identifier of the network device, the target hardware address field specifying the target hardware address, and the target protocol address field is undefined.
Example 10. The method of example 7, 8 or 9, wherein the response message conforms to the Address Resolution Protocol format.
Example 11. The method of example 10, wherein: the network device is a first network device, the response message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field, n is defined by the hardware address length field, m is defined by the protocol address length field, the operation code field specifying a value indicating that the response message is a duplicate hardware address detection response message, the source hardware address field specifies the target hardware address, the source protocol address field specifies a device identifier of a second network device, and the target hardware address field and the target protocol address field are undefined.
Example 12. The method of any of examples 1 to 11, wherein: the response message is a second response message, the method further comprises, prior to determining the target hardware address: receiving, by the network device, a frame having a destination address field specifying a broadcast address and comprising a first response message, the first response message specifying a hardware address; in response to receiving the first response message, storing, by the network device, the hardware address specified by the first response message in a database; and determining the target hardware address comprises determining, by the network device, based on the hardware address specified by the response message being stored in the database, the target hardware address such that the target hardware address does not match the hardware address specified by the response message.
Example 13. A method for detecting hardware address conflicts in a computer network, the method comprising: receiving, by a network device, a request message specifying a target hardware address; determining, by the network device, whether the target hardware address matches a hardware address of the network device; and in response to determining the target hardware address matches the hardware address of the network device, sending, by the network device, a response message specifying the target hardware address.
Example 14. The method of example 13, wherein the request message is a first request message and the target hardware address is a first target hardware address, the method further comprising: receiving, by the network device, a second request message specifying a second target hardware address; determining, by the network device, whether the second target hardware address matches the hardware address of the network device; and in response to determining the second target hardware address does not match the hardware address of the network device, not sending, by the network device, any message responding to the second request message.
Example 15. The method of example 13 or 14, wherein the target hardware address is a Media Access Control (MAC) address.
Example 16. The method of example 13, 14 or 15, wherein receiving the request message comprises receiving, by the network device, a frame having a destination address field specifying a broadcast address.
Example 17. The method of any of examples 13 to 16, wherein sending the response message comprises receiving, by the network device, a frame having a destination address field specifying a broadcast address.
Example 18. The method of any of examples 13 to 17, wherein the request message conforms to an Address Resolution Protocol format.
Example 19. The method of example 18, wherein receiving the request message comprises: receiving, by the network device, an Ethernet frame that comprises the request message, the Ethernet frame having an EtherType field specifying a value corresponding to the Address Resolution Protocol.
Example 20. The method of any of examples 13 to 19, wherein: the network device is a first network device, the request message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field, n is defined by the hardware address length field, m is defined by the protocol address length field, the operation code field specifying a value indicating that the request message is a duplicate hardware address detection request message, the source hardware address field specifies a NIC hardware address of a second network device, the NIC hardware address being assigned to a network interface controller (NIC) of the second network device at a time of manufacture of the NIC, the source protocol address field specifies a device identifier of the second network device, the target hardware address field specifying the target hardware address, and the target protocol address field is undefined.
Example 21. The method of any of examples 13 to 20, wherein the response message conforms to the Address Resolution Protocol format.
Example 22. The method of example 21, wherein: the response message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field, n is defined by the hardware address length field, m is defined by the protocol address length field, the operation code field specifying a value indicating that the response message is a duplicate hardware address detection response message, the source hardware address field specifies the target hardware address, the source protocol address field specifies a device identifier of the network device, and the target hardware address field and the target protocol address field are undefined.
Example 23. A network device comprising: a network interface controller (NIC); and processing circuitry implementing one or more processors configured to: determine a target hardware address; send a request message on a network, the request message specifying the target hardware address; determine whether the network device has received a response message specifying the target hardware address within a time limit; and in response to determining that the network device has received a response message specifying the target hardware address within the time limit, determine that the target hardware address is unavailable.
Example 24. The network device of example 23, wherein the target hardware address is a first target hardware address and the request message is a first request message, the one or more processors further configured to: determine a second target hardware address; send a second request message on the network, the second request message specifying the second target hardware address; determine whether the network device has received a response message specifying the second target hardware address within the time limit; and in response to determining that the network device has not received a response message specifying the second target hardware address within the time limit, determine that the second target hardware address is available.
Example 25. The network device of example 23 or 24, wherein the one or more processors are further configured to: based on the second target hardware address being available, assign the second target hardware address to a virtual machine.
Example 26. The network device of example 23, 24 or 25, wherein the request message and the response message conform to an Address Resolution Protocol format.
Example 27. The network device of any of examples 23 to 26, further comprising a database, the response message is a second response message, the one or more processors are further configured to, prior to determining the target hardware address: receive a frame having a destination address field specifying a broadcast address and comprising a first response message, the first response message specifying a hardware address; in response to receiving the first response message, store the hardware address specified by the first response message in the database, and wherein the one or more processors are configured such that, as part of determining the target hardware address, the one or more processors determine, based on the hardware address specified by the response message being stored in the database, the target hardware address such that the target hardware address does not match the hardware address specified by the response message.
Example 28. A network device comprising: a network interface controller (NIC); and processing circuitry implementing one or more processors configured to: receive a request message specifying a target hardware address; determine whether the target hardware address matches a hardware address of the network device; and in response to determining the target hardware address matches the hardware address of the network device, send a response message specifying the target hardware address.
Example 29. The network device of example 28, wherein the request message is a first request message and the target hardware address is a first target hardware address, the one or more processors further configured to: receive a second request message specifying a second target hardware address; determine whether the second target hardware address matches the hardware address of the network device; and in response to determining the second target hardware address does not match the hardware address of the network device, not send any message responding to the second request message.
Example 30. The network device of example 28 or 29, wherein the request message and the response message conform to an Address Resolution Protocol format.
Example 31. A computer-readable storage medium encoded with instructions for causing one or more programmable processors to perform the method recited by any of examples 1-12 or 13-22.

Moreover, any of the specific features set forth in any of the examples described above may be combined into beneficial examples of the described techniques. That is, any of the specific features are generally applicable to all examples of the present teachings. Various examples and embodiments have been described.

## Claims

1. A method for detecting hardware address conflicts in a computer network, the method comprising:
determining, by a network device, a target hardware address;
sending, by the network device, a request message on a network, the request message specifying the target hardware address;
determining, by the network device, whether the network device has received a response message specifying the target hardware address within a time limit; and
in response to determining that the network device has received a response message specifying the target hardware address within the time limit, determining that the target hardware address is unavailable.

2. The method of claim 1, wherein the target hardware address is a first target hardware address and the request message is a first request message, the method further comprising:
determining, by the network device, a second target hardware address;
sending, by the network device, a second request message on the network, the second request message specifying the second target hardware address;
determining, by the network device, whether the network device has received a response message specifying the second target hardware address within the time limit; and
in response to determining that the network device has not received a response message specifying the second target hardware address within the time limit, determining that the second target hardware address is available.

3. The method of claim 2, further comprising:
based on the second target hardware address being available, assigning the second target hardware address to a virtual machine.

4. The method of any combination of claims 1-3, wherein the target hardware address is a Media Access Control (MAC) address.

5. The method of any combination of claims 1-4, wherein sending the request message comprises:
sending, by the network device, a frame that comprises the request message, the frame having a destination address field specifying a broadcast address.

6. The method of any combination of claims 1-5, wherein the method further comprises:
including, in the request message, a NIC hardware address of the network device, the NIC hardware address being assigned to a network interface card (NIC) of the network device at a time of manufacture of the NIC.

7. The method of any combination of claims 1-6, wherein the request message conforms to an Address Resolution Protocol format.

8. The method of claim 7, wherein sending the request message comprises:
sending, by the network device, an Ethernet frame that comprises the request message, the Ethernet frame having an EtherType field specifying a value corresponding to the Address Resolution Protocol.

9. The method of any combination of claims 7-8, wherein:
the request message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field,
n is defined by the hardware address length field,
m is defined by the protocol address length field,
the operation code field specifying a value indicating that the request message is a duplicate hardware address detection request message,
the source hardware address field specifies a NIC hardware address of the network device, the NIC hardware address being assigned to a network interface controller (NIC) of the network device at a time of manufacture of the NIC,
the source protocol address field specifies a device identifier of the network device,
the target hardware address field specifying the target hardware address, and
the target protocol address field is undefined.

10. The method of any combination of claims 7-9, wherein the response message conforms to the Address Resolution Protocol format.

11. The method of claim 10, wherein:
the network device is a first network device,
the response message comprises a 16-bit hardware address space field, a 16-bit protocol address space field, an 8-bit hardware address length field, an 8-bit protocol address length field, a 16-bit operation code field, a n-bit sender hardware address field, a m-bit sender protocol address field, a n-bit target hardware address field, and a m-bit target protocol address field,
n is defined by the hardware address length field,
m is defined by the protocol address length field,
the operation code field specifying a value indicating that the response message is a duplicate hardware address detection response message,
the source hardware address field specifies the target hardware address,
the source protocol address field specifies a device identifier of a second network device, and
the target hardware address field and the target protocol address field are undefined.

12. The method of any combination of claims 1-11, wherein:
the response message is a second response message,
the method further comprises, prior to determining the target hardware address:
receiving, by the network device, a frame having a destination address field specifying a broadcast address and comprising a first response message, the first response message specifying a hardware address;
in response to receiving the first response message, storing, by the network device, the hardware address specified by the first response message in a database; and
determining the target hardware address comprises determining, by the network device, based on the hardware address specified by the response message being stored in the database, the target hardware address such that the target hardware address does not match the hardware address specified by the response message.

13. A network device comprising:
a network interface controller (NIC); and
processing circuitry implementing one or more processors configured to:
determine a target hardware address;
send a request message on a network, the request message specifying the target hardware address;
determine whether the network device has received a response message specifying the target hardware address within a time limit; and
in response to determining that the network device has received a response message specifying the target hardware address within the time limit, determine that the target hardware address is unavailable.

14. The network device of claim 13 comprising means for performing the method recited by any of claims 2-12.

15. A computer-readable storage medium encoded with instructions for causing one or more programmable processors to perform the method recited by any of claims 1-12.
